# EUROPEAN PATENT APPLICATION

(11) **EP 1 345 378 A2**
(43) Date of publication of application: **17.09.2003**
(21) Application number: 02259038.4
(22) Date of filing: 31.12.2002
(51) Int. Cl.: H04L 29/06, G06F 17/30

(54) **A method and system for providing caching services**

(30) Priority: 14.03.2002 US 364987 P; 25.07.2002 US 206592
(71) Applicant: Openwave Systems Inc., Redwood City, CA 94063 (US)
(72) Inventor: Bhasin, Aditya, Santa Clara, CA 95051 (US); Luna, Michael Edward Smith, Carnation, WA 98014 (US); Bashyam, Suresh Babu, Sunnyvale, CA 94087 (US); Patel, Piyush, San Jose, CA 95123 (US); Venketaramani, Ramkumar, Sunnyvale, CA 94086 (US)
(74) Representative: W.P. Thompson & Co.

(57) **Abstract**

In one embodiment, a method for providing proxy based caching services to a client device is provided. The method comprises selectively removing cookies from a message by an origin server to the client device; and caching the removed cookies separately for each unique combination of user identifier and client device identifier in the message.

## Description

### PRIORITY

The present application hereby claims the benefit of the filing date of a related Provisional Application filed on March 14, 2002, and assigned Application Serial No. 60/364,987.

### FIELD OF THE INVENTION

This invention relates to a method and system for providing proxy based caching services to a client device on a wireless network.

### BACKGROUND

Today, mobile client devices such as, mobile phones, personal digital assistants (PDAs), two-way pagers, etc. are often equipped with browsers (user agents) and able to connect wirelessly to computer networks, for example the Internet. Since many such client devices may be characterized as being thin client devices in that they have limited processing and memory capacity, proxy servers are often deployed, where possible, in order to provide services on behalf of such client devices to enhance a user's experience when using the devices. One example of such a use of a proxy server includes the caching of information on behalf of the thin client device.

Cookies are small packets of information than an origin server sends to a client device for caching at the client device. Cookies can include a variety of information and typically includes information that identifies the client device to the origin server so that content in the origin server may be personalized for a particular user. Once a cookie has been set (i.e. cached in memory) it is used in subsequent communications from the client device to the origin server. Instead of caching the cookies at the client device, proxy servers may be used to cache the cookies on behalf of a thin client device,

### SUMMARY OF THE INVENTION

In one aspect, the invention provides a method for providing proxy based caching services to a client device. The method, includes caching cookies on behalf of a thin client device wherein the cookies are stored separately for each unique combination of user identifier (ID), client device identifier (ID), and user agent type. In another embodiment of the invention basic authentication information required by an origin server to authenticate a client request is also stored separately in a proxy server for each unique combination of user identifier (ID), client device, identifier (ID), and user agent type.

### BRIEF DESCRIPTION OF THE DRAWINGS

Figure 1 shows an example of a network within which embodiments of the present invention may be practiced; and

Figures 2A and 2B show an example of the interaction between the various components of the network shown in Figure 1, according to one embodiment of the invention; and

Figure 3 shows exemplary hardware that may be used to practice embodiments of the present invention.

### DETAILED DESCRIPTION

In the following description, for purposes of explanation, numerous specific details are set forth in order to provide a thorough understanding of the invention. It will be apparent, however, to one skilled in the art that the invention can be practiced without these specific details. In other instances, structures and devices are shown in block diagram form in order to avoid obscuring the invention.

Reference in this specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Proxy servers may be deployed in order to provide caching services to thin client devices such as mobile telephones. An example of such a caching service includes a cookie caching service wherein cookies set by an origin server for a thin client device are cached in a proxy server. In the past, cookie caching as described has been done against some concept of user identification. This approach to cookie caching can be problematic, for example, in cases where a single subscriber may have multiple devices. To illustrate the problem that occurs in this scenario, consider for example the case where a single user identifier (ID) has been assigned to multiple client devices, such as in family calling plans where multiple mobile telephones belonging to different family members each share the same user ID for billing purposes. In this scenario, a first family member may visit an on-line shopping website using a mobile phone and create a shopping basket containing items which the user may be interested in purchasing at some time in the future. If a second family member accesses the same on-line shopping website using a different mobile phone, this second shopping member will have the ability to change the contents of the shopping basket since a cookie containing the contents of the shopping basket for the first user will be accessible to the second user as the two users share the same user ID. This situation is obviously undesirable.

The Wireless Access Protocol (WAP) 2.0 supports state management and allows a user of a mobile device to selectively tum off caching services provided by a proxy cache. This feature is desirable if the user wants to avoid personal information being stored in a proxy cache. This feature of being able to selectively turn off proxy cookie caching is not supported in the WAP 1.0 specification. Thus, older client devices which run the WAP 1.0 protocol do not have the ability to selectively turn off proxy based cookie caching.

The present invention provides techniques for overcoming the above problems. Proxy based cookie caching method and system is disclosed for providing cookie caching services on behalf of a thin client device. In one embodiment, the cookie caching service stores cookies on behalf of a thin client device based on a unique combination of device ID, user ID and user agent type. In addition, basic authentication information (such as user ID and password) required to access an origin server is also cached based on the unique combination of device ID, user ID and user agent type.

One advantage of the present invention is that it maintains a separate cookie cache for different users having different devices but who access a wireless network using the same user ID. Another advantage of the present invention is that it allows origin servers to set cookies based on device capabilities and user agent type. Thus, origin servers may customize content sent to users based on information about device and user agent type.

Since a user can have multiple devices which can be used to simultaneously access the origin server, the proxy based cookie caching service in accordance with the present invention will maintain multiple cookie caches for every device ID, user ID, and user agent combination. There is no sharing of cookies across devices or user agents belonging to a single subscriber.

The device ID could be the Mobile Identification Number (MIN) or the Electronic Serial Number (ESN) of a mobile telephone which uniquely defines a device. Because cookie caching according to embodiments of the invention is based, in part, on the user agent type, a user may have multiple browsers on a single device (for example, browsers by Microsoft and Netscape), and cookies generated for each browser will be stored separately.

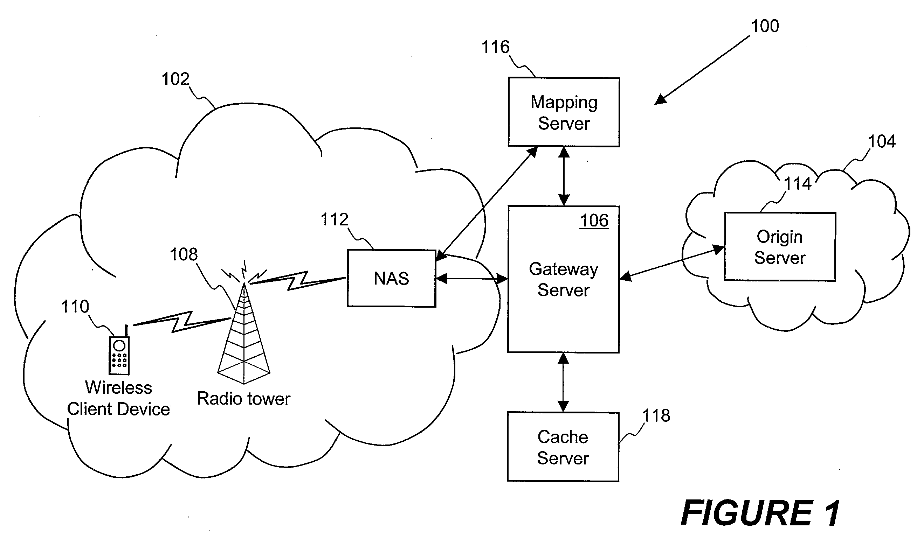

Referring now to Figure 1 of the drawings, reference numeral 100 generally indicates a network environment within which embodiments of the present invention may be practiced. The network environment 100 comprises a wireless network 102 which is connected to a wired network 104 by a proxy or gateway server 106.

The wireless network 102 may, for example, be a network such as a wireless Local Area Network (LAN), a Mobile Digital Packet Data (MDPD) network, a Global System for Mobile (GSM), a Code Division Multiple Access (CDMA) network, or a Time Division Multiple Access (TDMA) network. The communications protocol used by the wireless network 102 may include, for example, Hyper Text Transfer Protocol over Transmission Control Protocol (HTTP/TCP), Wireless Application Protocol (WAP) and/or Handheld Device Protocol (HDTP). Components of the wireless network 102 include base stations 108 (only one of which is shown in Figure 1 of the drawings), each of which facilitates wireless communications within its respective cell. Within each cell, wireless client devices may operate and Figure 1 of the drawings shows a mobile telephone 110 being representative of a wireless client device. Wired network 104 may be or may include the Internet, an intranet, or a data network such as a Local Area Network (LAN) or wide area network (WAN), or combination thereof. A network resource in the form of an origin server 114 is shown connected to wired network 104. The origin server 114 may, in one embodiment, be a World Wide Web server. The communications protocol supporting wireless network 104 may be, for example, Transmission Control Protocol (TCP/IP), Hypertext Transfer Protocol (HTTP), or Secure HTTP (sHTTP).

Gateway server 106 bridges communications between the wired network 104. In order to perform its function, gateway server 106 communicates with a network access server (NAS) 112, a mapping server 116, and a cache server 118, as will be explained in greater detail below.

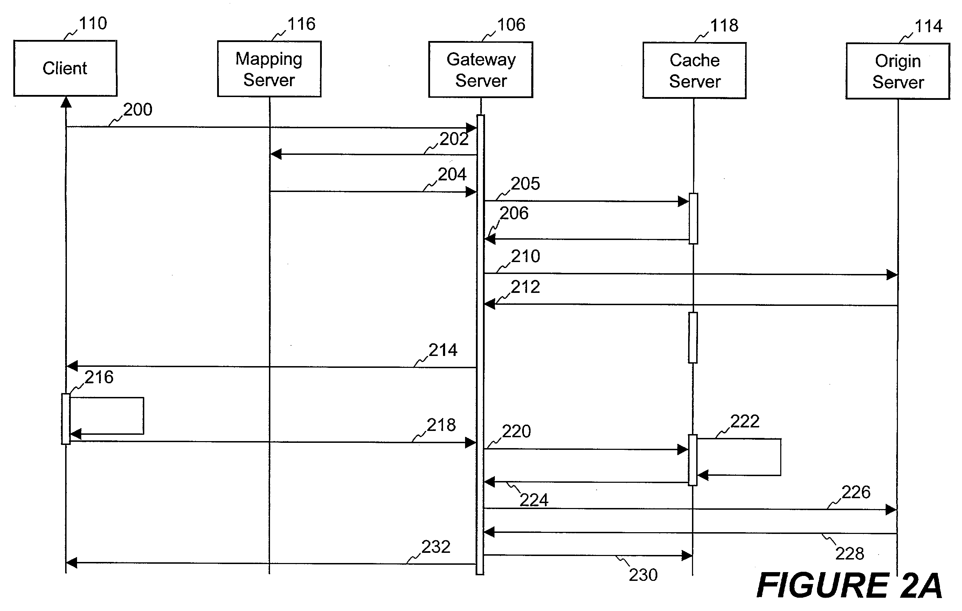

Referring now to Figure 2A of the drawings, a sequence of operations performed between the various servers in the network environment 100, in accordance with one embodiment of the present invention is shown chronologically from top to bottom. Starting at 200 wireless client device 110 sends a message to gateway server 106 requesting access to origin server 114. Gateway server 106 responds by sending a request to mapping server 116, at 202, requesting mapping information from the mapping server 116. The mapping information comprises a user ID and device ID previously mapped to a mobile IP address that was assigned by NAS 112 to wireless client device 110 when wireless client device logged into wireless network 102. Thus, at 204 mapping server 116 returns the mapping or binding of device ID, user ID and mobile IP address for wireless client device 110 to gateway server 106.

At 206 gateway server 106 requests cookie and Basic Authentication (BA) information from cache server 118 based on the combination of device ID, user ID, and user agent type associated with the request at 200. The BA information generally comprises authentication information, such as user ID and password, required by origin server 114 to allow access by a client device. Since request 200 to access origin server 114 is an original request to origin server 114, there being no prior request, the reply by cache server 118 to message 206 at 208 will contain no cookie or BA information.

At 210 gateway server 106 sends request 200 to origin server 114. Since request 200 does not include any BA information, origin server 114 responds by issuing an authentication challenge at 212. In response, and at 214, gateway server 106 forwards the authentication challenge 212 to wireless client device 110.

At 216, wireless client device 110 adds the BA information and sends a new request containing the BA information, at 218, to gateway server 106. Gateway server 106 sends a message at 220 to cache server 118 requesting cookie information based on the unique combination of device ID, user ID, and user agent type, in the new request and also requesting cache server 118 to cache the BA information. At 222, cache server 118 responds by saving the BA information but no cookies are attached since no cookies have been stored on behalf of the combination of device ID, user ID, and user agent type. Cache server 118 sends a reply containing no cookie at 224 to gateway server 106. Gateway server 106 forwards, at 226, the request and basic authentication information to origin server 114.

In response to request 226, origin server 114 sends a response 228 including cookies to gateway server 106. Gateway server 106 forwards the response 228 to cache server 118 at 230. In response, cache server 118 removes the cookies from response 228 and caches the cookies separately based on each unique combination of device ID, user ID, and user agent type contained in message 230. At 234, gateway server 106 sends response 228 without the cookies to wireless client device 110.

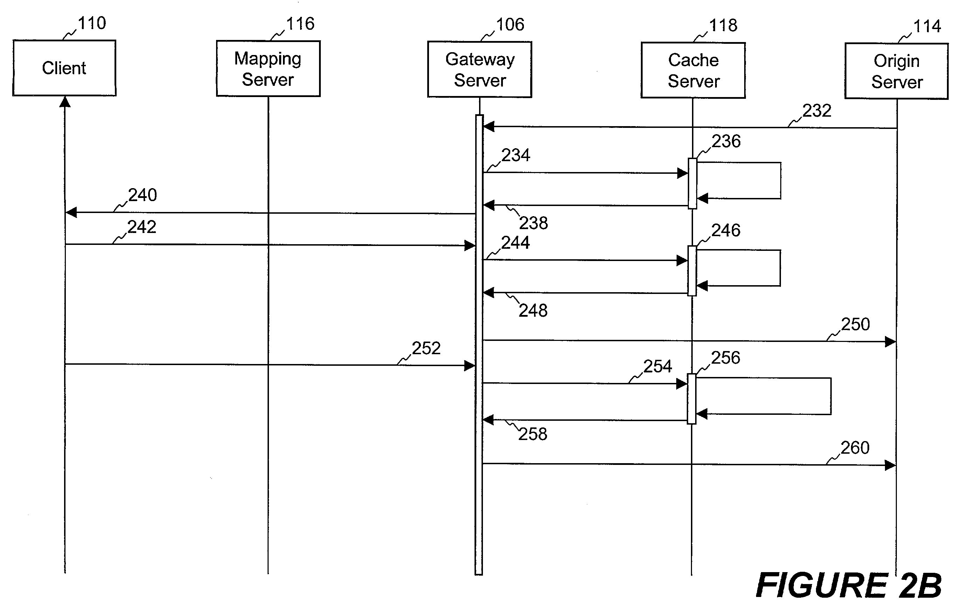

Referring now to Figure 2B of the drawings, in response to request 230, origin server 114 sends a reply to gateway server 106 at 232 including a cookie. At 234, gateway server 106 forwards the reply/response including the cookie to cache server 118 which, at 236, caches the cookie and sends a response without the cookie at 238 to gateway server 106. Gateway server 106, at 240, sends the response without the cookie to wireless client device 110.

It is assumed that wireless client device 110 sends a new request during the same session, at 242, to gateway server 106, which then responds at 244, by requesting cookie and BA information from cache server 118. At 246, cache server 118 attaches the cookie that was previously cached at 236 and sends a reply, at 248, to gateway server 106 that includes the cookie. Cache server 118 will not add BA information to the request 252 since it already contains this information. Gateway server 106, at 250, sends the request 242 together with the cookie to origin server 114. It is assumed at 252, that Wireless client device 110 sends a new request which is a request in a new session between wireless client device 110 in origin server 114. Gateway server 106, responds to this request 252, at 254, by requesting cookie and BA information from cache server 118. Cache server 118 responds by attaching the cookie and basic authentication information that was saved at 226 to request 252, and by sending a response including the cookie and BA information, at 258, to gateway server 106. Gateway server 106 then forwards, at 260, the request including the cookie and BA information to origin server 114.

Thus, the new request 252 is automatically authenticated at origin server 114 because cache server 118 attached the necessary BA information to the request. Saving the cookie at 236 and BA information at 226 is performed separately for each unique combination of device ID, user ID, and user agent type.

The proxy caching service described with reference to Figures 2A and 2B may be selectively turned off. The manner in which the proxy based caching service is turned off will depend on the particular communications protocol used by the wireless client device. For example, if the wireless client device is running the Wireless Application Protocol (WAP) Version 2.0 then a user of the client device has an option of selectively turning off the proxy based caching service running on cache server 118 caching on behalf of the client device. However, the earlier WAP version 1.0 protocol does not provide support to selectively turn off proxy based cookie caching. Embodiments of the present invention overcome this problem by using information contained in a client request to an origin server as a key to stored information which indicates whether proxy based caching is to be disabled in a particular case. In one embodiment, gateway server 106 or some other component in the network environment 100 stores a look-up table which contains information indicating whether proxy based caching is to be enabled or disabled based on a model and make of a client device. In use, gateway server 106 extracts the model and client device information from a client request and uses this information as a key to access the look-up table in order to ascertain whether to enable or disable proxy based caching for the request. Thus, it will be seen that by using information contained in a client request as a key to access stored information indicating whether to allow or disallow proxy based caching, the present invention emulates the capability of WAP 2.0 to selectively turn off cookie caching on behalf of a client.

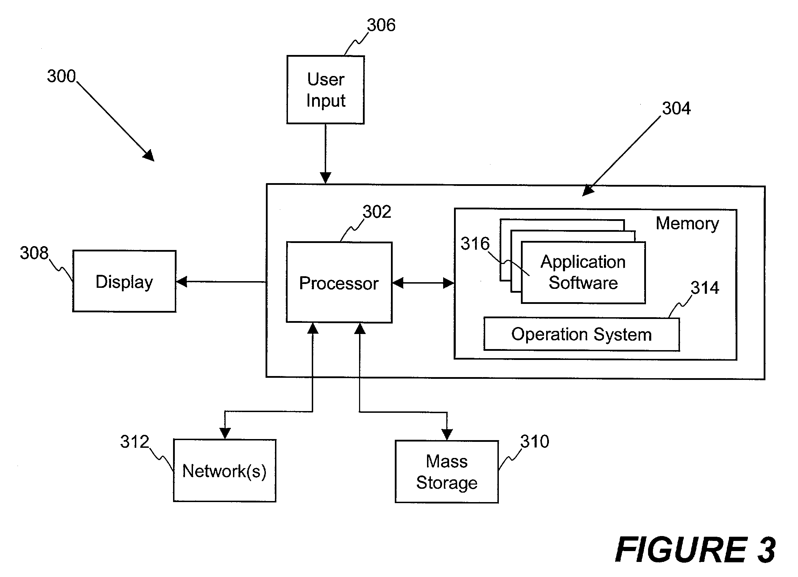

Referring now to Figure 3 of the drawings, reference numeral 300 generally indicates an example of processing system that may represent any of components 106, 112, 114, 116 and 118 shown in Figure 1 of the drawings.

Processing system 300 typically includes at least one processor 302 coupled to a memory 304. Processor 302 may represent one or more processors (e.g. microprocessors), and memory 304 may represent random access memory (RAM) devices comprising a main storage of system 300, as well as any supplemental levels of memory e.g., cache memories, non-volatile or back-up memories (e.g. programmable or flash memories), read-only memories, etc. In addition, memory 304 may be considered to include memory storage physically located elsewhere in system 300, e.g. any cache memory in a processor 302, as well as any storage capacity used as a virtual memory, e.g., as stored on a mass storage device 310 or on another computer coupled to system 300 via network 312.

Processing system 300 also typically receives a number of inputs and outputs for communicating information externally. For interface with a user or operator, system 300 includes one or more user input devices 306 (e.g., a keyboard, a mouse, etc.) and a display 308 (e.g., a CRT monitor, a LCD panel). However, with some implementations of system 300, such as in a server, direct (local) user input and output may not be required, such that user input devices 306 and display 308 may be omitted.

For additional storage, system 300 may also include one or more mass storage devices 310, e.g., a floppy or other removable disk drive, a hard disk drive, a Direct Access Storage Device (DASD), an optical drive (e.g. a CD drive, a DVD drive, etc.) and/or a tape drive, among others. Furthermore, system 300 may include an interface with one or more networks 312 (e.g., a land, a WAN, a wireless network, and/or the Internet among others) to permit the communication of information with other computers coupled to the networks. It should be appreciated that system 300 typically includes suitable analog and/or digital interfaces between processor 302 and each of the components 304, 306, 308 and 312 as is well known in the art.

Processing system 300 operates under the control of an operating system 314, and executes various computer software applications, components, programs, objects, modules, etc. (e.g. a program or module which performs operations as shown in Figure 2A and 2B of the drawings). Moreover, various applications, components, programs, objects, etc. may also execute on one or more processors in another computer coupled to system 300 via a network 312, e.g. in a distributed computing environment, whereby the processing required to implement the functions of a computer program may be allocated to multiple computers over a network.

In general, the routines executed to implement the embodiments of the invention, maybe implemented as part of an operating system or a specific application, component, program, object, module or sequence of Instructions referred to as "computer programs". The computer programs typically comprise one or more instructions set at various times in various memory and storage devices in a computer, and that, when read and executed by one or more processors in a computer, cause the computer to perform these steps necessary to execute steps or elements involving the various aspects of the invention. Moreover, while the invention has been described in the context of fully functioning computers and computer systems, those skilled in the art will appreciate that the various embodiments of the invention are capable of being distributed as a program product in a variety of forms, and that the invention applies equally regardless of the particular type of signal bearing media used to actually carry out the distribution. Examples of signal bearing media include recordable type media such as volatile and non-volatile memory devices, floppy and other removable disks, hard disk drives, optical disks (e.g. CD ROMS, DVDs, etc.), among others, and transmission type media such as digital and analog communication links.

Although the present invention has been described with reference to specific exemplary embodiments, it will be evident that the various modification and changes can be made to these embodiments without departing from the broader spirit of the invention as set forth in the claims. Accordingly, the specification and drawings are to be regarded in an illustrative sense rather than in a restrictive sense.

## Claims

1. A method for providing proxy based caching services to a client device, the method comprising:
selectively removing cookies from a message by an origin server to the client device; and
caching the removed cookies separately for each unique combination of user identifier and client device identifier in the message.

2. A system comprising:
a processor;
a memory coupled to the processor, the memory storing instructions which when executed by the processor cause the processor to perform a method comprising selectively removing cookies from a message by an origin server to a client device; and caching the removed cookies separately for each a unique combination of user identifier and client device identifier in the message.

3. A computer program product, or a computer-readable medium having stored thereon instructions, which when executed by a processor cause the processor to perform a method comprising:
selectively removing cookies from a message by an origin server to a client device; and
caching the removed cookies separately for each unique combination of user identifier and client device identifier in the message.

4. The method of claim 1, or the system of claim 2, or the computer program product or computer-readable medium of claim 3, wherein selectively removing the cookies is based on information contained in the message.

5. The method, system, computer program product or computer-readable medium of claim 4, wherein the information comprises a parameter of a communications protocol used in communications between the client device and the origin server which when set indicates that cookies are not to be removed from the message.

6. The method, system, computer program product or computer-readable medium of claim 4, wherein the information comprises a key to stored data associated with the key, the stored data indicating whether cookies are to be removed from the message.

7. The method, system, computer program product or computer-readable medium of claim 6, wherein the key comprises a model and make of the client device.

8. The method, system, computer program product or computer-readable medium of claim 6, wherein the key comprises the user identifier and client device identifier.

9. The method of claim 1, or the system of claim 2, or the computer program product or computer-readable medium of claim 3, wherein each unique combination is a unique combination of user identifier, client device identifier, and user-agent type.

10. The method, system, computer program product or computer-readable medium of claim 9, wherein the method further comprises caching authentication information sent by the client device in a request to the origin server separately for each unique combination; and adding the authentication information to a client device request to the origin server at a start of a new session between the client device and the origin server.

11. The method, system, computer program product or computer-readable medium of claim 10, wherein the method further comprises deleting the cached authentication information after a predetermined time.

12. A system for providing proxy based caching services, the system comprising:
means for selecting removing cookies from a message by an origin server to a client device; and
means for caching the removed cookies separately for each unique combination of user identifier and client device identifier in the reply.

13. The system of claim 12, wherein each unique combination is a unique combination of user identifier, client device identifier, and user-agent type.

14. A method for providing proxy based caching services to a client device, the method comprising:
receiving a client message from a client device, the message being a first message to an origin server;
determining if cookie caching is to be enabled based on the client message;
forwarding the client message to the origin server;
receiving server messages from the origin server, the server messages being to the client device;
removing any cookies from the server messages if cookie caching has been enabled; and
storing the cookies separately for each unique combination of user identifier and client device identifier in the server messages.

15. The method of claim 14, wherein storing the cookies comprises storing the cookies separately for each unique combination of the user identifier, client device identifier, and user agent type.

16. The method of claim 14, wherein determining if cookie caching is to be enabled comprises checking if a Wireless Access Protocol 2.0 command for disabling cookie caching is contained in the client message.

17. The method of claim 14, wherein determining if cookie caching is to be enabled comprises using a model and make of the client device as a key to access stored information indicating whether cooking caching is to be enabled.
